# EUROPEAN PATENT SPECIFICATION

(11) **EP 4 168 501 B1**
(45) Date of publication and mention of the grant of the patent: **17.12.2025**
(21) Application number: 21863857.5
(22) Date of filing: 06.09.2021
(51) Int. Cl.: C09D 11/00, C09B 23/04, C09B 67/46, C09B 67/02, C09D 11/037, C09D 11/10, C09D 11/50, C09B 57/00, C09K 11/06

(54) **A THERMORESPONSIVE SELF-ASSEMBLED ORGANIC MATERIAL AS PHOTONIC INK AND A PROCESS OF MAKING THEREOF**
WÄRMEEMPFINDLICHES SELBSTORGANISIERTES ORGANISCHES MATERIAL ALS PHOTONISCHE TINTE UND HERSTELLUNGSVERFAHREN DAFÜR
MATÉRIAU ORGANIQUE AUTO-ASSEMBLÉ THERMOSENSIBLE COMME ENCRE PHOTONIQUE ET SON PROCÉDÉ DE FABRICATION

(30) Priority: 05.09.2020 IN 202011038507
(43) Date of publication of application: 26.04.2023
(73) Proprietor: Council Of Scientific & Industrial Research, New Delhi 110 001 (IN)
(72) Inventor: AJAYAGHOSH, Ayyappanpillai, Pappanamcode Kerala Thiruvananthapuram 695019 (IN); CHERUMUKKIL, Sandeep, Pappanamcode Kerala Thiruvananthapuram 695019 (IN); CHAKKOOTH, Vijayakumar, Pappanamcode Kerala Thiruvananthapuram 695019 (IN)
(74) Representative: Reddie & Grose LLP
(86) International application number: PCT/IN2021/050860
(87) International publication number: WO 2022/049605

(56) References cited:
- WO-A1-2019/243286
- CN-A- 103 194 085
- CN-A- 105 693 588
- CN-A- 105 968 327
- JP-A- 2006 249 243

## Description

### FIELD OF THE INVENTION

The present invention relates to a thermoresponsive two-dimensionally periodic-layered self-assembly of an organic luminescent chromophore of formula I with properties incorporating the advantages of a photonic material [photonic ink]. 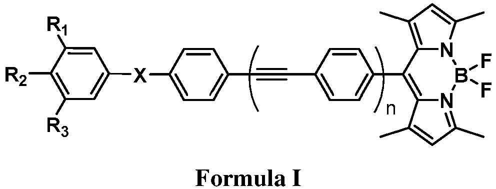 wherein,
R₁, R₂ and R₃ = alkyl [C₁-C₁₈] or alkoxy [C₁-C₁₈] hydrocarbon;
X = -CONH or -NH or -COO or -CO or -SO₂NH;
n = 1 or 2 or 3.

Particularly, the present invention relates to material that shows enhanced and spectrally controlled/ tunable photoluminescence. More particularly, the present invention relates to a process for the preparation of fluorescent, thermo-responsive, photonic ink.

### BACKGROUND AND PRIOR ART OF THE INVENTION

Colors are important in life not only for aesthetic reasons but also for communication, signalling, safety and security applications. Colors are usually produced through either the absorption of light by molecules (pigmentary colors) or scattering of light by periodically arranged nanostructures (structural colors). Structural colors are often considered to be superior to pigmentary colors because of their tunability (possible to create any color in the visible spectrum), stability (resistance to light and chemicals), and reduced dependence on expensive/toxic metals/materials. Natural creations such as the shells of marine species, wings of butterflies and the feathers of birds exhibit distinct angle-dependent reflection of light, resulting in brilliant color variations. These are typical examples of photonic functional materials. *[See* US Patent No. WO2018098232A1, ***Reference may be made to*** Eliason, C. M. et al. J. R. Soc. Interface, 2012, 9, 2279, Eliason, C. M., Proc. Biol. Sci. 2013, 280, 20131505 and Shawkey, M. D., J. Morphol. 2015, 276, 378.]

Many recent studies have demonstrated the use of advanced self-assembly techniques to produce photonic materials that generate colors across the visible spectrum. **[*See*** US Patent No. US 2002/0062782A1, US 7,106,938B2, WO 2006/084123A2]. Nanoimprint lithography (NIL) is a common method to develop high-performance and low-cost photonic materials. Recently, advanced NIL and soft-lithography techniques are being used for large-scale fabrication of functional photonic materials. For example, roll-to-roll NIL, roll-to-plate NIL, reverse NIL, dip pen NIL techniques are recently being reported. ***[Reference may be made** to* Zhang, C. et al. J. Mater. Chem. C, 2016, 4, 5133 and Lova, P. et al. Springer International Publishing Switzerland 2015, Organic and Hybrid Photonic Crystals, DOI 10.1007/978-3-319-16580-6_9].

Also, a variety of organic chromophores based photonic ink materials/formulations are reported in recent years **[*See*** US Patent No. WO 2005/068566A1, US 2005/0252411A1]. Molecules with high fluorescence quantum yields such as perylenediimides, naphathalene derivatives, BODIPYs, carbon dots, etc., with interesting optical properties are the most explored chromophores for various optoelectronic applications. Among them, BODIPY is a well-studied functional chromophore having a wide range of applications **[*See*** US Patent No. US9611281B2, US 9,267,949B2, US20130244251A1, WO2012071012A2, ***See*** EP2384329A1]. However, no photonic ink formulations are reported with these materials.

Though both bottom-up self-assembly and top-down nanolithography methods have been widely used as discussed above, significant challenges remain to achieve the high contrast color switching and a scalable process for industrial applications of photonic materials. Moreover, recent examples of structural colors lack sufficient color saturation in the absence of absorbing materials such as carbon black, gold nanoparticles, or polymers **[*Reference may be made to*** Xiao, Ming et al. *Sci Adv.* **2017,** 3, e1701151 and Meadows, M. G. et al. *J. R. Soc. Interface,* **2009,** 6, S107-S113]. Herein, present invention discloses the preparation of a scalable photonic ink formulation based on a BODIPY [Boron-Dipyrromethene] derivative represented by the **Formula I** having high contrast color switching for anti-counterfeiting and other applications.

### OBJECTIVES OF THE INVENTION

The main objective of the present invention is to provide a fluorescent-dye-derivative of Formula I.

Another objective of the present invention is to provide a thermo-responsive photonic ink formulation consisting of self-assembled powder of the Formula I for anti-counterfeiting and other practical applications.

Yet another object of the present invention is to provide a process of making photonic ink formulation consisting of self-assembled powder of the Formula I.

### SUMMARY OF THE INVENTION

Accordingly, the present invention relates to a fluorescent, thermo-responsive, self-assembled, organic chromophore of formula I 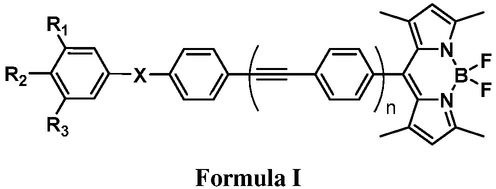 wherein,
R₁, R₂ and R₃ = alkyl [C₁-C₁₈] or alkoxy [C₁-C₁₈] hydrocarbon;
X = -CONH or -NH or -COO or -CO or -SO₂NH;
n = 1 or 2 or 3.

In an embodiment, the present invention provides a photonic ink formulation comprising:
i. an organic chromophore of formula I in a range of 10 to 40 wt %;
ii. a polymer binder or polymer resin in a range of 10 to 30 wt%;
iii. a solvent as a dispersant in a range of 50 to 80 wt%.

In yet another embodiment of the present invention, said formulation is in a gel form, a film form or a dispersion form.

In yet another embodiment of the present invention, the polymer resin used is selected from the group consiting of a polyether alcohol like polyethylene glycol, polypropylene glycol, polybutylene glycol; polyvinyl resin like polyvinyl alcohol, polyvinyl butyral, polyvinyl pyrrolidone, vinyl pyrrolidone-vinyl acetate copolymers; a polyamine resin-like polyallylamine, polyvinylamine and polyethyleneimine; a polyacrylate resin-like polymethyl acrylate, polyethylene acrylate, polymethyl methacrylate, and polyvinyl methacrylate and, an amino resin, an alkyl resin, an epoxy resin, a phenol resin, a polyesterimide resin, a polyamide resin, a polyimide resin, a silicone resin, a phenol resin, a ketone resin, rosin, a rosin-modified resin, a petroleum resin, a cellulose resin, and a natural resin.

In yet another embodiment of the present invention, the solvent is selected from the group consisting of organic solvent, water and preferred examples include halogen-based solvents; aprotic polar solvents; alcohols; aromatic solvents; ketone-based solvents; and ether-based solvents.

In yet another embodiment, present invention provides a process for the preparation of photonic ink formulation comprising the steps of:
i. dissolving an organic chromophore of formula I into polymer resin by heating at temperature in a range of 50 - 60°C followed by stirring to obtain a solution;
ii. adding 0.1 wt % of photoinitiator followed by degassing for a period in the range of 10 - 20 minutes by purging with argon and subsequently exposed to UV light (365 nm) for a period in the range of 70-80 hours to form cross-linked gel;
iii. dissolving the cross linked gel as obtained in step (ii) in an organic solvent followed by drop cast over glass substrates and evaporated the solvent under vacuum at room temperature in a range of 25-30°C to obtain the photonic ink formulation.

In yet another embodiment of the present invention, the photoinitiator is 2,2-dimethoxy-2-phenylacetophenone.

In yet another embodiment of the present invention, the said dilution with organic solvent being done by a factor of 20.

In yet another embodiment, present invention provides a process for developing photonic ink formulation comprising the steps of:
i. adding an organic chromophore of formula I in a solvent to obtain a solution having concentration above 5 mM, more preferably, 10 mM;
ii. drop-casting the solution as obtained in step (i) followed by annealing at temperature in the range of 290 - 300 °C, allows angle-dependent color variation under visible and UV lights.

In yet another embodiment of the present invention, solvent used is toluene.

### BRIEF DESCRIPTION OF THE FIGURES

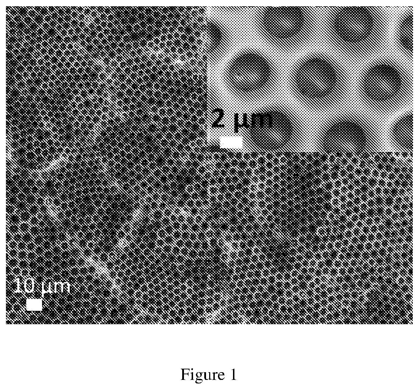

**Figure 1** represents the periodic arrangement of the two-dimensional layered photonic self-assembly obtained by re-dissolving (in chloroform) the polystyrene gel of the annealed photonic material of general Formula I as observed under SEM [Scanning Electron Microscopy] (magnified image is shown in the inset).

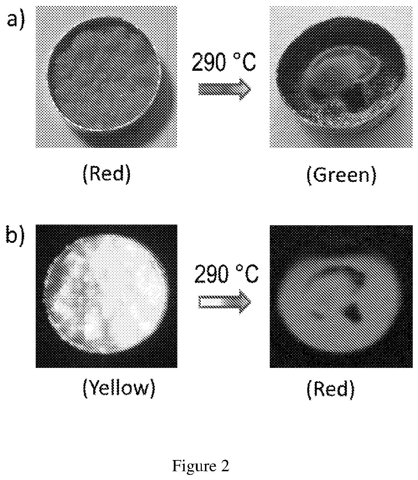

**Figure 2** represents the photographs showing the colors of powder of the general Formula I at room temperature (left) and upon annealing at 290 °C (right) under visible light (2a) and UV light (2b), respectively.

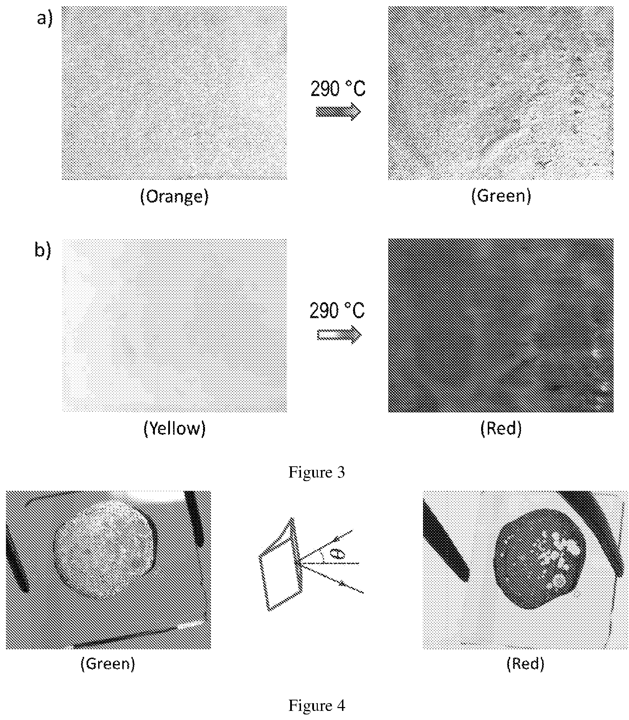

**Figure 3** represents the photographs showing the colors of a film of the general Formula I at room temperature (left) and upon annealing at 290 °C (right) under visible (3a) and UV light (3b), respectively.
**Figure 4** represents the angle-dependent colors of the annealed film of the general Formula I under daylight.

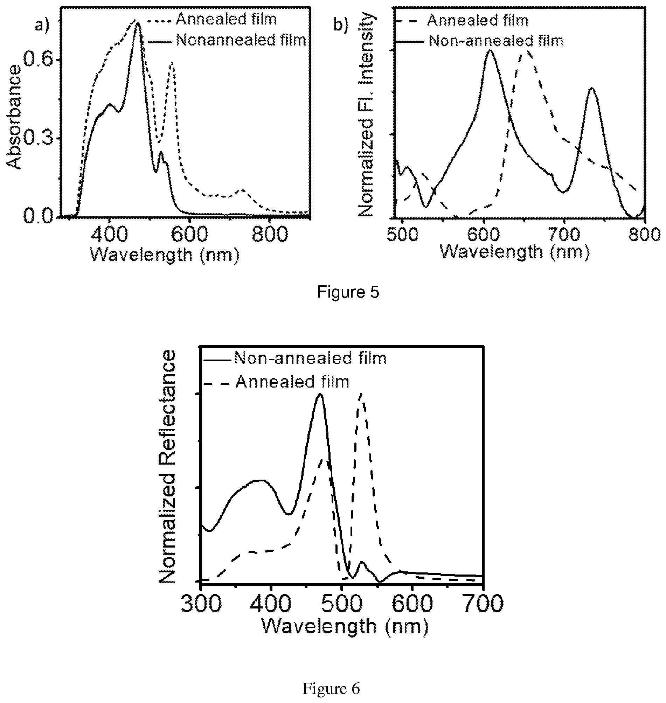

**Figure 5** represents absorption (left) and emission (right; *λ*ₑₓ [Lamda excitation]= 475 nm) spectra of the film of the general Formula I at room temperature (solid line) and upon annealing at 290 °C (dotted line).
**Figure 6** represents the reflectance spectra of the film of general Formula I at room temperature (solid line) and upon annealing at 290 °C (dotted line).

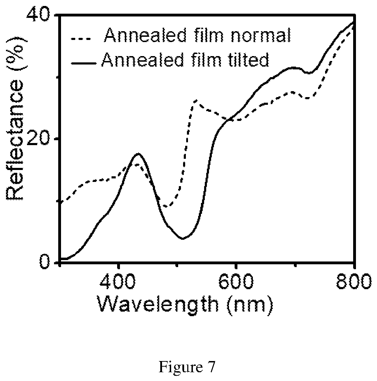

**Figure 7** represents the angle-dependent reflectance spectra of the 290 °C annealed film of general Formula I corresponding to the green (solid line) and red (dotted line) colors as in Figure 3.

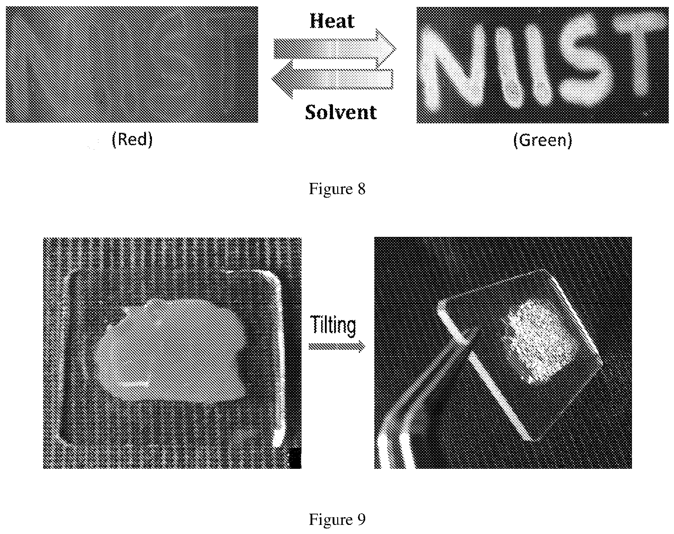

**Figure 8** represents the reversible thermochromic fluorescence response of an ink formulated from an annealed powder of the general Formula I.
**Figure 9** represents the angle-dependent colors of the film obtained by re-dissolving the polystyrene gel of the annealed photonic material of general Formula I in chloroform under daylight.

### DETAIL DESCRIPTION OF THE INVENTION

The invention provides a photonic material which comprises of a two-dimensionally periodic microporous structural matrix of interconnecting, crystallographically oriented, monodispersed members having voids between adjacent members.

Present invention provides a method to make photonic structures from the self-assembled material of the general Formula I, which showed angle-dependent color changes and photoluminescence. Further, the present invention provides a process for the preparation of fluorescent thermo-responsive photonic annealed powder of Formula I for anti-counterfeiting and other practical applications in the form of an ink formulation.

The present invention also provides a process to make a photonic ink formulation consisting of the Formula I. The present invention also provides the use of the fluorescent property of the photonic material as temperature stimuli-responsive ink. The present invention also provides the use of annealed photonic material of the Formula I capable of showing two colors in daylight in the polystyrene gel matrix when viewed orthogonally and at a tilted angle of the drop-casted gel over a glass substrate. 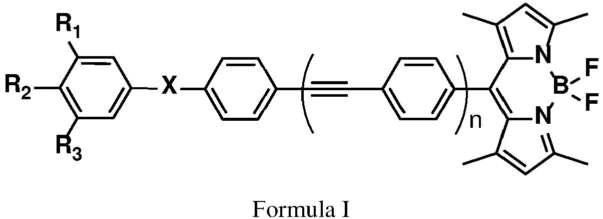 wherein,
R₁ = R₂ = R₃ = alkyl or alkoxy hydrocarbon
X = -CONH or -NH or -COO or -CO or -SO₂NH
n = 1 or 2 or 3.

R₁ to R₃ stand on each occurrence, identically or differently, for alkyl or alkoxy hydrocarbon. The alkyl group can be straight chain or branched like methyl, ethyl, n-propyl, isopropyl, n-butyl, sec-butyl, tert-butyl, pentyl, hexyl, heptyl, octyl, isooctyl, nonyl, decyl, undecyl, dodecyl, tetradecyl, pentadecyl, hexadecyl, heptadecyl, octadecyl, 2-ethylbutyl, 2,2-dimethylbutyl, n-heptyl, 2-methylhexyl, 3-methylhexyl, 2,2-dimethylpentyl, 3,3-dimethylpentyl, 2,3-dimethylpentyl, 2,4-dimethylpentyl, 3-ethylpentyl, 2,2,3-trimethylbutyl, n-octyl groups.

The alkoxy chains can be straight or branched chains like methoxy, ethoxy, n-propoxy, isopropoxy, n-butoxy, sec-butoxy, tert-butoxy, amyloxy, isoamyloxy or tert-amyloxy, heptyloxy, octyloxy, pentoxy, heptyloxy, octyloxy, isooctyloxy, nonyloxy, decyloxy, undecyloxy, dodecyloxy, tetradecyloxy, pentadecyloxy, hexadecyloxy, heptadecyloxy and octadecyloxy groups.

The appended alkyl or alkoxy chains/branches and the functional group of the general Formula I will help the molecule in self-assembling *via* non-covalent interactions. The fluorescence property of the molecule represented by the general Formula I is introduced by the incorporation of a dye at the end; whereas, the 1,2-diphenylethyne units facilitate controlled aggregation.

'X' can be a functional group like secondary amide (-CONH-), amine (-NH), carboxyl (-COO), carbonyl (-CO), and sulphonamide (-NHSO₂-).

The 'n' is preferably an integer 1 or 2 or 3. This represents the basic definition.

The fluorescent material is a two-dimensionally periodic layered self-assembly of a dye-represented by the Formula I.

Fluorescent thermo-responsive photonic material is drop-cast from a solution consisting of 10 to 40 weight percent powder of the Formula I, 10 to 30 weight percent of a polymer binder along with 50 to 80 weight percent of an organic solvent as a dispersant, the solvent may be any solvent capable of satisfactorily dissolving or dispersing the components.

The amount of the solvent in the thermo-responsive photonic material by the general Formula I is 50 to 80 weight percentage, preferably 60 to 80 weight percentage, and more preferably 65 to 70 weight percentage, relative to the total amount of the photonic material of Formula I.

Fluorescent thermo-responsive photonic ink formulation, 10 to 40 weight percent powder of the general Formula I, 10 to 20 weight percent of a polymer binder along with 50 to 80 weight percent of an organic solvent as a dispersant.

The dispersant is capable of satisfactorily dissolving or dispersing or miscible with the components in the mixture. The solvent can be an organic polar solvent and mixed solvents thereof. The dispersant used is selected preferably from an organic solvent, water and preferred examples include halogen-based solvents; aprotic polar solvents; alcohols; aromatic solvents; ketone-based solvents; and ether-based solvents. The dispersant used can be polar protic solvents like water, most alcohols and preferred examples of alcohols such as methanol, ethanol, butanol, isopropanol; aromatic solvents such as chlorobenzene, xylene, benzene, toluene, dichlorobenzene, mesitylene, tetralin, tetramethyl benzene, and pyridine; halogen-based solvents such as chloroform, dichloromethane; aprotic polar solvents such as NMP [N-Methyl-2-pyrrolidone] and DMF [Dimethylformamide]; and ether-based solvents such as THF, diethylether. The amount of solvent in the preparation of photonic ink is up to 50 to 80 by weight percentage, preferably 60 to 80 by weight percentage, and more preferably 65 to 70 by weight percentage, relative to the total amount of the general Formula I composite material.

A binder in an ink is any substance that allows the dye molecule to adhere to the substrate or printed surface or to allow the dye to uniformly disperse in the ink formulated. The binder used for ink compositions of the present invention is an ingredient not only used for binding the dye by the general Formula I assemblies but also making the ink composition thermally luminescence responsive. Here, it can be a polymer resin that can be dissolved in the above-mentioned solvent satisfactorily and with which the viscosity of the ink composition can be adjusted approximately. Specific examples of the preferred binder resins included the resins listed below: a polyether alcohol like polyethylene glycol, polypropylene glycol, polybutylene glycol; polyvinyl resin like polyvinyl alcohol, polyvinyl butyral, polyvinyl pyrrolidone, vinyl pyrrolidone-vinyl acetate copolymers; a polyamine resin-like polyallylamine, polyvinylamine and polyethyleneimine; a polyacrylate resin-like polymethyl acrylate, polyethylene acrylate, polymethyl methacrylate, and polyvinyl methacrylate and an amino resin, an alkyl resin, an epoxy resin, a phenol resin, a polyesterimide resin, a polyamide resin, a polyimide resin, a silicone resin, a phenol resin, a ketone resin, rosin, a rosin-modified resin, a petroleum resin, a cellulose resin, and a natural resin. It can also be a silicone resin, a phenol resin, a ketone resin, rosin, a rosin-modified resin (phenol, maleic acid, fumaric acid resin, etc.), a petroleum resin, a cellulose resin such as ethyl cellulose and nitrocellulose, and natural resin. Particularly preferred binder resins include polyvinyl resin, polyethylene alcohol, polyacrylate resin, polyamine resin, etc., which are usually employed for photonic inks. Preferably, the polymer resin used is polystyrene, preferably of molecular weight > 90000 more preferably > 100000.

The combined amount of the binder resin to be blended can be from 10 to 30 by weight percentage, preferably from 10 to 20 by weight percentage based on the total quantity of the ink prepared. If the amount is less than 10 by weight percentage, it is impossible to fix BODIPY compounds on the desired substrate. On the other hand, if the amount is over 30 by weight percentage, the injection stability of the ink compositions may be deteriorated. Further, a binder layer will resultantly cover thickly around a luminous compound, resulting in the probability of deterioration of emission of the luminous compound.

Images or letters are written with photonic ink over paper/alumina substrate initially exhibited two different emission colors, greenish-blue at the edges of the letters and red emission at the core, under a UV lamp. However, upon gradual heating to temperature from 60 to 90 °C, more preferably at 80 °C, over a hot plate, the luminescence color shifts to yellowish-green. When the substrate was again exposed to solvent vapor, preferably, polar protic solvents, and more preferably, methanol, ethanol, butanol, isopropanol, the initial red luminescence of the general Formula I photonic ink material re-appeared. The luminescence switching is not possible in the absence of a binder.

The photonic material is stable up to 350 °C, and is capable of producing a color difference in response to a temperature gradient in the range 250 - 350 °C, preferably in the range of 270 - 300 °C. The photonic material derived from general Formula I also shows color change with respect to angle variation in the range of 0° to 60° preferably 30° to 60°.

### EXAMPLES

Following examples are given by way of illustration and therefore should not be construed to limit the scope of the invention.

### Example 1

### Preparation of methyl 3,4,5- tris(alkoxy)benzoate (1)

Methyl 3,4,5- trihydroxy benzoate (5 g, 27.2 mmol) and potassium carbonate (18.73 g, 135.8 mmol) were stirred in a 250 ml round bottom flask containing 80 ml dry DMF. The reaction mixture was stirred for 20 minutes under room temperature [25°C] and added 1-bromoalkane (13.02 g, 95.03 mmol) dropwise. It was then heated to 90 °C for 24 h. After cooling to room temperature, the reaction mixture was poured into water and extracted the organic part with chloroform repeatedly. Washed the organic layer with enough water and brine solution and dried over anhydrous sodium sulphate. Removed the solvent under reduced pressure and then subjected to purification by column chromatography (silica gel, 1% ethylacetate/n-hexane) to afford compound methyl 3,4,5- tris(alkoxy)benzoate as a white solid.

### Example 2

### Preparation of methyl 3,4,5-tris(alkoxy)benzoic acid (2)

Methyl 3,4,5- tris(alkoxy)benzoate (6 g, 17.03 mmol) was refluxed in ethanol (60 ml) with KOH (3.1 g, 56.2 mmol) in a 250 ml round bottom flask for 12 h. Cooled back to normal temperature and acidified the reaction mixture with dilute HCl, again cooled in ice-cold water and the precipitate was filtered, washed with water and dried under vacuum to get the pure product methyl 3,4,5-tris(alkoxy)benzoic acid.

### Example 3

### Preparation of 3,4,5-tris(alkoxy)-N-(4-iodophenyl)benzamide (3)

The acid **2** (3 g, 8.87 mmol) was dissolved in dry dichloroethane (20 ml) and taken in a 250 ml round bottom flask under argon atmosphere. Thionyl chloride (1.93 ml, 26. 61 mmol) was added dropwise to the reaction chamber and continued stirring for 5 h. Excess solvent and thionyl chloride was purged out by argon gas and dried completely in vacuum. It was then re-dissolved in 20 ml dry toluene and added to another reaction chamber containing 4-iodoaniline (2.33 g, 10.64 mmol) dissolved in toluene (20 ml) and 2 ml of dry triethyl amine, stirring continued for another 12 h under argon atmosphere. After completion of the reaction, the solvent toluene was evaporated and residue was extracted using chloroform. The organic layer was washed with water and brine solution and dried over anhydrous sodium sulphate. Purified by silica column chromatography and eluted the compound with 1% ethylacetate/n-hexane solvent system to get the pure product 3 as a white powder.

### Example 4

### Preparation of compound 4

Compound 3 (1 g, 1.9 mmol), bis(triphenylphosphine)palladium (II) dichloride (10 mol%), and copper (I) iodide (10 mol%) were added to an oven-dried two-neck round bottom flask equipped with a magnetic stirring bar. The round bottom flask was then sealed with a rubber septum, evacuated and backfilled with argon three times. Degassed triethylamine (10 ml) was added followed by degassed THF (20 ml). After stirring for 5 minutes at room temperature, trimethylsilyl acetylene (0.4 ml, 2.8 mmol) was added dropwise into the reaction mixture and continued stirring for 12 h. The reaction mixture was extracted using chloroform and washed with dilute hydrochloric acid. The organic layer was washed with brine and dried over anhydrous sodium sulphate and then evaporated under reduced pressure. The residue thus obtained purified by silica gel column chromatography using 2% ethylacetate-n-hexane as an eluent.

### Example 5

### Preparation of compound 5

To a solution of **4** (1 g, 1.96 mmol) in 10 ml dichloromethane, KF (2.23 g, 39.2 mmol) in 50 ml methanol was added to it and allowed to stir at room temperature for 12 h. After completion of the reaction, the reaction mixture was extracted using chloroform, washed with water, brine and then dried over anhydrous sodium sulphate. The solvent was evaporated under reduced pressure. The residue thus obtained purified by silica gel column chromatography using 5% ethylacetate/n-hexane as an eluent afforded the compound **5** as a white solid.

### Example 6

### Preparation of the Formula I

Compound BODIPY derivative (0.32 g, 0.71 mmol), bis(triphenylphosphine)palladium (II) dichloride (10 mol%), and copper (I) iodide (10 mol%) were added to an oven-dried two-neck round bottom flask equipped with a magnetic stirring bar. The round bottom flask was then sealed with a rubber septum, evacuated and backfilled with argon three times. Degassed triethylamine (30 ml) was added followed by degassed THF (50 ml). After stirring for 5 minutes at room temperature, compound **5** (0.37 g, 0.85 mmol) dissolved in 10 ml (1:1) mixture of degassed triethylamine and THF was added and the reaction mixture was stirred at 60 °C for 24 h. The reaction mixture was extracted using chloroform and washed with dilute hydrochloric acid. The organic layer was washed with brine and dried over anhydrous sodium sulphate and then evaporated under reduced pressure. The crude product was then purified by column chromatography using silica gel as adsorbent. The pure compound of the Formula I was eluted with 40% dichloromethane-n-hexane solvent mixture.

### Example 7

### Preparation of SEM sample

The annealed material of Formula I - styrene gel diluted with excess chloroform, sonicated, drop-casted over a silicon wafer, which was then subjected to SEM analysis.

### Example 8

### Preparation of Photonic ink Formulation in film form

Self-assembled material of Formula I in toluene (5 x 10⁻² M) was coated over a glass substrate and subsequently annealed over the hot plate at 290-300 °C inside a glove box.

### Example 9

### Preparation of Photonic ink Formulation in dispersion form

Annealed powder (5 mg) of Formula I was dispersed in 20 ml of a solution consisting of dispersant and binder in the weight ratio of 80:20.

### Example 10

### Coating of substrate material on substrates

The above suspension is used to write letters over alumina or filter paper substrate using a brush. The letters initially appeared as red fluorescent and slowly transforms to yellow upon heating to 80 °C slowly over hot plate. The fluorescence is reversed back when the substrate is exposed to solvent vapor (ethanol).

### Example 11: Preparation of Photonic ink Formulation in Gel form

2 mg of Formula I dissolved in 1 mL of styrene monomer by heating at 50-60 °C followed by stirring. Thereafter, added 0.1 wt % of photoinitiator (2,2-dimethoxy-2-phenylacetophenone) and degassed for 10-20 min by purging with argon and subsequently exposed to UV light (365 nm) for 70-80 h until it forms a cross-linked gel. The average molecular weight of the gel was found to be 100,000 g/mol by GPC [Gel Permeation Chromatograpy] using polystyrene as standard and THF as eluent. The photonic gel film was obtained by dissolving the gel in chloroform, drop cast over glass substrates and evaporated the solvent under vacuum at room temperature (25-30 °C)

### ADVANTAGES OF THE INVENTION

- A simple method to make photonic structures from self-assembled organic chromophore of the Formula I, which showed angle-dependent color changes and photoluminescence. The invented photoluminescent photonic material is stable up to 350 °C, suitable for real-world applications.
- The invented photonic material is capable of exhibiting a high contrast color switching in response to a temperature stimulus.
- The invented photonic material exhibits dual-color under daylight when embedded in the polystyrene gel matrix.
- These features make this material and ink formulation suitable for anti-counterfeiting and other important applications. Finally, the process developed for the photonic material is a scalable one and suitable for industrial-scale production.

## Claims

1. A fluorescent, thermo-responsive, self-assembled, organic chromophore of formula I: 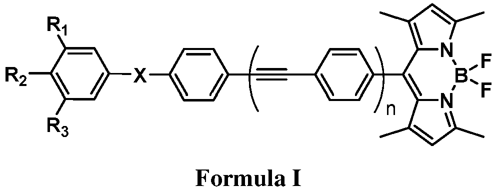 wherein:
R₁, R₂ and R₃ = alkyl [C₁-C₁₈] or alkoxy [C₁-C₁₈] hydrocarbon;
X = -CONH or -NH or -COO or -CO or -SO₂NH; and
n = 1 or 2 or 3.

2. A photonic ink formulation, comprising:
i. A fluorescent, thermo-responsive, self-assembled organic chromophore of formula I in a range of 10 to 40 wt %, wherein formula I is: 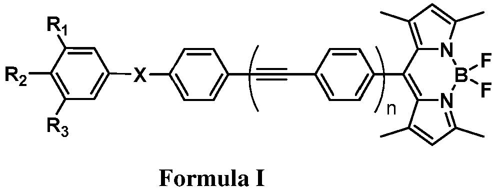 wherein:
R₁, R₂ and R₃ = alkyl [C₁-C₁₈] or alkoxy [C₁-C₁₈] hydrocarbon;
X = -CONH or -NH or -COO or -CO or -SO₂NH; and
n = 1 or 2 or 3;
ii. a polymer binder or polymer resin in a range of 10 to 30 wt%; and
iii. a solvent as a dispersant in a range of 50 to 80 wt%.

3. The photonic ink formulation as claimed in claim 2, wherein said formulation is in a gel form, a film form or a dispersion form.

4. The photonic ink formulation as claimed in claim 2, wherein the polymer resin is selected from the group consiting of a polyether alcohol, a polyvinyl resin, a polyamine resin, a polyacrylate resin, an amino resin, an alkyl resin, an epoxy resin, a phenol resin, a polyesterimide resin, a polyamide resin, a polyimide resin, a silicone resin, a phenol resin, a ketone resin, rosin, a rosin-modified resin, a petroleum resin, a cellulose resin, and a natural resin.

5. The photonic ink formulation as claimed in claim 4, wherein the polyether alcohol is selected from the group consiting of polyethylene glycol, polypropylene glycol and polybutylene glycol; wherein the polyvinyl resin is selected from the group consiting of polyvinyl alcohol, polyvinyl butyral, polyvinyl pyrrolidone and vinyl pyrrolidone-vinyl acetate copolymers; wherein the polyamine resin is selected from a group consisting of polyallylamine, polyvinylamine and polyethyleneimine; wherein the polyacrylate resin is selected from a group consisting of polymethyl acrylate, polyethylene acrylate, polymethyl methacrylate, and polyvinyl methacrylate.

6. The photonic ink formulation as claimed in claim 2, wherein the solvent is selected from the group consisting of halogen-based solvent, protic polar solvent, aprotic polar solvent, alcohols, aromatic solvent, ketone-based solvent, and ether-based solvent.

7. The photonic ink formulation as claimed in claim 6, wherein the halogen-based solvent is selected from the group consisting of chloroform and dichloromethane; wherein the protic polar solvent is selected from the group consisting of water and alcohols; wherein the alcohols are selected from the group consisting of methanol, ethanol, butanol and isopropanol; wherein the aprotic polar solvent is selected from the group consisting of NMP (N-Methyl-2-pyrrolidone) and DMF (Dimethylformamide); wherein the aromatic solvent is selected from the group consisting of chlorobenzene, xylene, benzene, toluene, dichlorobenzene, mesitylene, tetralin, tetramethyl benzene, and pyridine; and wherein the ether-based solvent is selected from the group consisting of THF (tetrahydrofuran) and diethylether.

8. A process for preparation of a photonic ink formulation, comprising:
i. Dissolving a fluorescent, thermo-responsive, self-assembled organic chromophore of formula I into polymer resin by heating at temperature in a range of 50 - 60°C followed by stirring to obtain a solution,
wherein formula I is: 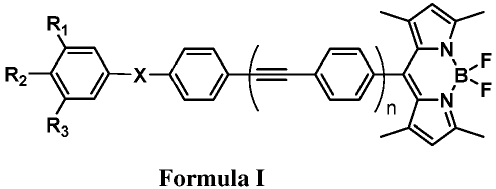 wherein:
R₁, R₂ and R₃ = alkyl [C₁-C₁₈] or alkoxy [C₁-C₁₈] hydrocarbon;
X = -CONH or -NH or -COO or -CO or -SO₂NH; and
n = 1 or 2 or 3;
ii. adding 0.1 wt % of photoinitiator followed by degassing for a period in a range of 10 - 20 minutes by purging with argon and subsequently exposed to UV light (365 nm) for a period in a range of 70-80 hours to form cross-linked gel; and
iii. dissolving the cross linked gel as obtained in step (ii) in an organic solvent followed by drop cast over glass substrates and evaporated the solvent under vacuum at room temperature in a range of 25-30°C to obtain the photonic ink formulation.

9. The process as claimed in claim 8, wherein the photoinitiator is 2,2-dimethoxy-2-phenylacetophenone.

10. The process as claimed in claim 8, wherein the organic solvent is selected from the group consisting of halogen-based solvent, protic polar solvent, aprotic polar solvent, alcohols, aromatic solvent, ketone-based solvent, and ether-based solvent.

11. The process as claimed in claim 8, wherein the halogen-based solvent is selected from the group consisting of chloroform and dichloromethane; wherein the protic polar solvent is selected from the group consisting of water and alcohols; wherein the alcohols are selected from the group consisting of methanol, ethanol, butanol and isopropanol; wherein the aprotic polar solvent is selected from the group consisting of NMP (N-Methyl-2-pyrrolidone) and DMF (Dimethylformamide); wherein the aromatic solvent is selected from the group consisting of chlorobenzene, xylene, benzene, toluene, dichlorobenzene, mesitylene, tetralin, tetramethyl benzene, and pyridine; and wherein the ether-based solvent is selected from the group consisting of THF (tetrahydrofuran) and diethylether.

12. The process as claimed in claim 8, wherein the dilution with organic solvent is being done by a factor of 20.

13. A process for developing of a photonic ink formulation, comprising:
i. adding a fluorescent, thermo-responsive, self-assembled organic chromophore of formula I in a solvent to obtain a solution having concentration above 5 mM; wherein formula I is: 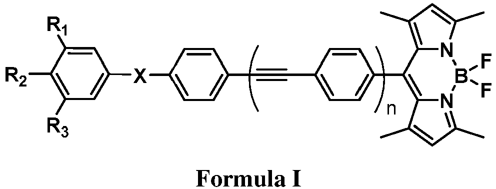 wherein:
R₁, R₂ and R₃ = alkyl [C₁-C₁₈] or alkoxy [C₁-C₁₈] hydrocarbon,
X = -CONH or -NH or -COO or -CO or -SO₂NH, and
n = 1 or 2 or 3; and
ii. drop-casting the solution as obtained in step (i) followed by annealing at temperature in a range of 290 - 300 °C, allows angle-dependent color variation under visible and UV lights.

14. The process as claimed in claim 13, wherein the concentration of the solution is 10 mM.

15. The process as claimed in claim 13, wherein the solvent is selected from the group consisting of a halogen-based solvent, a protic polar solvent, an aprotic polar solvent, an alcohols, an aromatic solvent, a ketone-based solvent, and an ether-based solvent; wherein the halogen-based solvent is selected from the group consisting of chloroform and dichloromethane; wherein the protic polar solvent is selected from the group consisting of water and alcohol-based solvent; wherein the alcohols are selected from the group consisting of methanol, ethanol, butanol and isopropanol; wherein the aprotic polar solvent is selected from the group consisting of NMP (N-Methyl-2-pyrrolidone) and DMF (Dimethylformamide); wherein the aromatic solvent is selected from the group consisting of chlorobenzene, xylene, benzene, toluene, dichlorobenzene, mesitylene, tetralin, tetramethyl benzene, and pyridine; and wherein the ether-based solvent is selected from the group consisting of THF (tetrahydrofuran) and diethylether.

## Patentansprüche

1. Fluoreszierender, thermoresponsiver, selbstorganisierter, organischer Chromophor von Formel I: 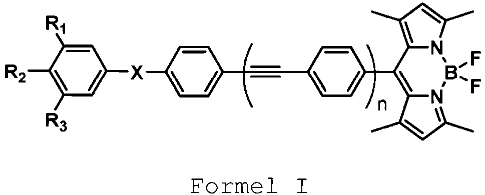 wobei:
R₁, R₂ und R₃ = Alkyl[C₁-C₁₈] oder Alkoxy[C₁-C₁₈] Kohlenwasserstoff;
X = -CONH oder -NH oder -COO oder -CO oder -SO₂NH; und
n = 1 oder 2 oder 3.

2. Photonische Tintenformulierung, die Folgendes umfasst:
i. einen fluoreszierenden, thermoresponsiven, selbstorganisierten organischen Chromophor von Formel I in einem Bereich von 10 bis 40 Gew.-%, wobei Formel I wie folgt lautet: 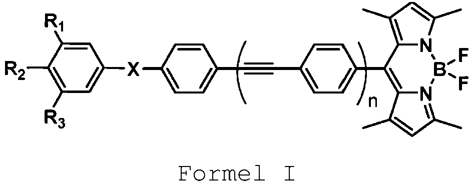 wobei:
R₁, R₂ und R₃ = Alkyl[C₁-C₁₈] oder Alkoxy[C₁-C₁₈] Kohlenwasserstoff;
X = -CONH oder -NH oder -COO oder -CO oder -SO₂NH; und
n = 1 oder 2 oder 3;
ii. ein Polymerbindemittel oder Polymerharz in einem Bereich von 10 bis 30 Gew.-%; und
iii. ein Lösungsmittel als Dispergiermittel in einem Bereich von 50 bis 80 Gew.-%.

3. Photonische Tintenformulierung nach Anspruch 2, wobei die genannte Formulierung in Gelform, Filmform oder Dispersionsform vorliegt.

4. Photonische Tintenformulierung nach Anspruch 2, wobei das Polymerharz ausgewählt ist aus der Gruppe bestehend aus einem Polyetheralkohol, einem Polyvinylharz, einem Polyaminharz, einem Polyacrylatharz, einem Aminoharz, einem Alkylharz, einem Epoxidharz, einem Phenolharz, einem Polyesterimidharz, einem Polyamidharz, einem Polyimidharz, einem Silikonharz, einem Phenolharz, einem Ketonharz, Kolophonium, einem kolophoniummodifizierten Harz, einem Erdölharz, einem Celluloseharz und einem Naturharz.

5. Photonische Tintenformulierung nach Anspruch 4, wobei der Polyetheralkohol ausgewählt ist aus der Gruppe bestehend aus Polyethylenglykol, Polypropylenglykol und Polybutylenglykol; wobei das Polyvinylharz ausgewählt ist aus der Gruppe bestehend aus Polyvinylalkohol, Polyvinylbutyral, Polyvinylpyrrolidon und Vinylpyrrolidon-Vinylacetat-Copolymeren; wobei das Polyaminharz ausgewählt ist aus einer Gruppe bestehend aus Polyallylamin, Polyvinylamin und Polyethylenimin; wobei das Polyacrylatharz ausgewählt ist aus einer Gruppe bestehend aus Polymethylacrylat, Polyethylenacrylat, Polymethylmethacrylat und Polyvinylmethacrylat.

6. Photonische Tintenformulierung nach Anspruch 2, wobei das Lösungsmittel ausgewählt ist aus der Gruppe bestehend aus halogenbasiertem Lösungsmittel, protischem polarem Lösungsmittel, aprotischem polarem Lösungsmittel, Alkoholen, aromatischem Lösungsmittel, ketonbasiertem Lösungsmittel und etherbasiertem Lösungsmittel.

7. Photonische Tintenformulierung nach Anspruch 6, wobei das halogenbasierte Lösungsmittel ausgewählt ist aus der Gruppe bestehend aus Chloroform und Dichlormethan; wobei das protische polare Lösungsmittel ausgewählt ist aus der Gruppe bestehend aus Wasser und Alkoholen; wobei die Alkohole ausgewählt sind aus der Gruppe bestehend aus Methanol, Ethanol, Butanol und Isopropanol; wobei das aprotische polare Lösungsmittel ausgewählt ist aus der Gruppe bestehend aus NMP (N-Methyl-2-pyrrolidon) und DMF (Dimethylformamid); wobei das aromatische Lösungsmittel ausgewählt ist aus der Gruppe bestehend aus Chlorbenzol, Xylol, Benzol, Toluol, Dichlorbenzol, Mesitylen, Tetralin, Tetramethylbenzol und Pyridin; und wobei das etherbasierte Lösungsmittel ausgewählt ist aus der Gruppe bestehend aus THF (Tetrahydrofuran) und Diethylether.

8. Verfahren zur Herstellung einer photonischen Tintenformulierung, das Folgendes beinhaltet:
i. Auflösen eines fluoreszierenden, thermoresponsiven, selbstorganisierten organischen Chromophors von Formel I in Polymerharz durch Erhitzen auf eine Temperatur im Bereich von 50 bis 60 °C, gefolgt von Rühren, um eine Lösung zu erhalten,
wobei Formel I wie folgt lautet: 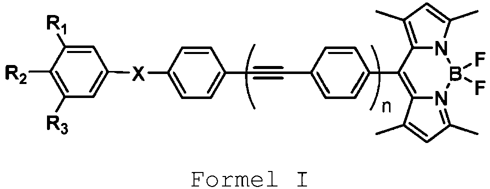 wobei:
R₁, R₂ und R₃ = Alkyl [C₁-C₁₈] oder Alkoxy [C₁-C₁₈] Kohlenwasserstoff;
X = -CONH oder -NH oder -COO oder -CO oder -SO₂NH; und
n = 1 oder 2 oder 3;
ii. Zugeben von 0,1 Gew.-% Photoinitiator, gefolgt von Entgasen über einen Zeitraum von 10 bis 20 Minuten durch Spülen mit Argon und anschließender Bestrahlung mit UV-Licht (365 nm) über einen Zeitraum von 70 bis 80 Stunden, um ein vernetztes Gel zu bilden; und
iii. Auflösen des in Schritt (ii) erhaltenen vernetzten Gels in einem organischen Lösungsmittel, gefolgt von Tropfenguss über Glassubstrate und Verdampfen des Lösungsmittels unter Vakuum bei Raumtemperatur im Bereich von 25 bis 30 °C, um die photonische Tintenformulierung zu erhalten.

9. Verfahren nach Anspruch 8, wobei der Photoinitiator 2,2-Dimethoxy-2-phenylacetophenon ist.

10. Verfahren nach Anspruch 8, wobei das organische Lösungsmittel ausgewählt ist aus der Gruppe bestehend aus halogenbasiertem Lösungsmittel, protischem polarem Lösungsmittel, aprotischem polarem Lösungsmittel, Alkoholen, aromatischem Lösungsmittel, ketonbasiertem Lösungsmittel und etherbasiertem Lösungsmittel.

11. Verfahren nach Anspruch 8, wobei das halogenbasierte Lösungsmittel ausgewählt ist aus der Gruppe bestehend aus Chloroform und Dichlormethan; wobei das protische polare Lösungsmittel ausgewählt ist aus der Gruppe bestehend aus Wasser und Alkoholen; wobei die Alkohole ausgewählt sind aus der Gruppe bestehend aus Methanol, Ethanol, Butanol und Isopropanol; wobei das aprotische polare Lösungsmittel ausgewählt ist aus der Gruppe bestehend aus NMP (N-Methyl-2-pyrrolidon) und DMF (Dimethylformamid); wobei das aromatische Lösungsmittel ausgewählt ist aus der Gruppe bestehend aus Chlorbenzol, Xylol, Benzol, Toluol, Dichlorbenzol, Mesitylen, Tetralin, Tetramethylbenzol und Pyridin; und wobei das etherbasierte Lösungsmittel ausgewählt ist aus der Gruppe bestehend aus THF (Tetrahydrofuran) und Diethylether.

12. Verfahren nach Anspruch 8, wobei die Verdünnung mit organischem Lösungsmittel um einen Faktor von 20 erfolgt.

13. Verfahren zur Entwicklung einer photonischen Tintenformulierung, das Folgendes beinhaltet:
i. Zugeben eines fluoreszierenden, thermoresponsiven, selbstorganisierten organischen Chromophors von Formel I in einem Lösungsmittel, um eine Lösung mit einer Konzentration von über 5 mM zu erhalten;
wobei Formel I wie folgt lautet: 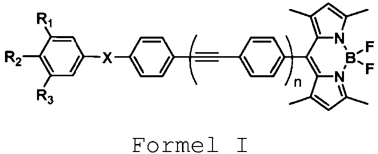 wobei:
R₁, R₂ und R₃ = Alkyl[C₁-C₁₈] oder Alkoxy[C₁-C₁₈] Kohlenwasserstoff,
X = -CONH oder -NH oder -COO oder -CO oder -SO₂NH und
n = 1 oder 2 oder 3; und
ii. Tropfengießen der in Schritt (i) erhaltenen Lösung, gefolgt von Tempern bei einer Temperatur im Bereich von 290 bis 300 °C, was eine winkelabhängige Farbvariation unter sichtbarem und UV-Licht ermöglicht.

14. Verfahren nach Anspruch 13, wobei die Konzentration der Lösung 10 mM beträgt.

15. Verfahren nach Anspruch 13, wobei das Lösungsmittel ausgewählt ist aus der Gruppe bestehend aus einem halogenbasierten Lösungsmittel, einem protischen polaren Lösungsmittel, einem aprotischen polaren Lösungsmittel, einem Alkohol, einem aromatischen Lösungsmittel, einem ketonbasierten Lösungsmittel und einem etherbasierten Lösungsmittel; wobei das halogenbasierte Lösungsmittel ausgewählt ist aus der Gruppe bestehend aus Chloroform und Dichlormethan; wobei das protische polare Lösungsmittel ausgewählt ist aus der Gruppe bestehend aus Wasser und alkoholbasierten Lösungsmitteln; wobei die Alkohole ausgewählt sind aus der Gruppe bestehend aus Methanol, Ethanol, Butanol und Isopropanol; wobei das aprotische polare Lösungsmittel ausgewählt ist aus der Gruppe bestehend aus NMP (N-Methyl-2-pyrrolidon) und DMF (Dimethylformamid); wobei das aromatische Lösungsmittel ausgewählt ist aus der Gruppe bestehend aus Chlorbenzol, Xylol, Benzol, Toluol, Dichlorbenzol, Mesitylen, Tetralin, Tetramethylbenzol und Pyridin; und wobei das etherbasierte Lösungsmittel ausgewählt ist aus der Gruppe bestehend aus THF (Tetrahydrofuran) und Diethylether.

## Revendications

1. Chromophore organique, fluorescent, thermo-sensible, auto-assemblé de la formule I : 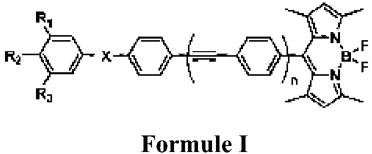 dans lequel :
R₁, R₂ et R₃ = alkyle en C₁-C₁₈ ou hydrocarbure alcoxy en C₁-C₁₈ ;
X = -CONH ou -NH ou -COO ou -CO ou -SO₂NH ; et
n = 1 ou 2 ou 3.

2. Formulation d'encre photonique, comprenant :
i. un chomophore organique, fluorescent, thermo-sensible, auto-assemblé de la formule I dans une plage de 10 à 40 % en poids, dans laquelle la formule I est : 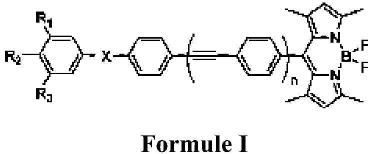 dans laquelle :
R₁, R₂ et R₃ = alkyle en C₁-C₁₈ ou hydrocarbure alcoxy en C₁-C₁₈ ;
X = -CONH ou -NH ou -COO ou -CO ou -SO₂NH ; et
n = 1 ou 2 ou 3 ;
ii. un liant polymère ou une résine polymère dans une plage de 10 à 30 % en poids ; et
iii. un solvant en tant que dispersant dans une plage de 50 à 80 % en poids.

3. Formulation d'encre photonique selon la revendication 2, où ladite formulation est sous une forme de gel, sous une forme de film ou sous une forme de dispersion.

4. Formulation d'encre photonique selon la revendication 2, dans laquelle la résine polymère est sélectionnée parmi le groupe composé d'un alcool de polyéther, d'une résine polyvinylique, d'une résine de polyamine, d'une résine de polyacrylate, d'une résine aminée, d'une résine alkylique, d'une résine époxy, d'une résine phénolique, d'une résine de polyestérimide, d'une résine de polyamide, d'une résine de polyimide, d'une résine de silicone, d'une résine phénolique, d'une résine de cétone, de colophane, d'une résine de colophane modifiée, d'une résine de pétrole, d'une résine de cellulose et d'une résine naturelle.

5. Formulation d'encre photonique selon la revendication 4, dans laquelle l'alcool de polyéther est sélectionné parmi le groupe composé de polyéthylène glycol, polypropylène glycol et polybutylène glycol ; dans laquelle la résine polyvinylique est sélectionnée parmi le groupe composé d'alcool polyvinylique, polybutyral de vinyle, polyvinylpyrrolidone, copolymères de vinylpyrrolidone-acétate de vinyle ; dans laquelle la résine de polyamine est sélectionnée parmi un groupe composé de polyallylamine, polyvinylamine et polyéthylèneimine ; dans laquelle la résine de polyacrylate est sélectionnée parmi un groupe composé d'acrylate de polyméthyle, acrylate de polyéthylène, méthacrylate de polyméthyle et méthacrylate de polyvinyle.

6. Formulation d'encre photonique selon la revendication 2, dans laquelle le solvant est sélectionné parmi le groupe composé d'un solvant à base d'halogène, d'un solvant polaire protique, d'un solvant polaire aprotique, d'alcools, d'un solvant aromatique, d'un solvant à base de cétone et d'un solvant à base d'éther.

7. Formulation d'encre photonique selon la revendication 6, dans laquelle le solvant à base d'halogène est sélectionné parmi le groupe composé de chloroforme et de dichlorométhane ; dans laquelle le solvant polaire protique est sélectionné parmi le groupe composé d'eau et d'alcools ; dans laquelle les alcools sont sélectionnés parmi le groupe composé de méthanol, éthanol, butanol et isopropanol ; dans laquelle le solvant polaire aprotique est sélectionné parmi le groupe composé de NMP (N-méthyl-2-pyrrolidone) et de DMF (diméthylformamide) ; dans laquelle le solvant aromatique est sélectionné parmi le groupe composé de chlorobenzène, xylène, benzène, toluène, dichlorobenzène, mésitylène, tétraline, tétraméthylbenzène et pyridine ; et dans laquelle le solvant à base d'éther est sélectionné parmi le groupe composé de THF (tétrahydrofurane) et de diéthyléther.

8. Procédé de préparation d'une formulation d'encre photonique, comprenant :
i. Dissoudre un chromophore organique, fluorescent, thermo-sensible, auto-assemblé de la formule I dans une résine polymère en chauffant à une température dans la plage de 50 - 60 °C ce qui est suivi par agitation pour obtenir une solution.
dans lequel la formule I est : 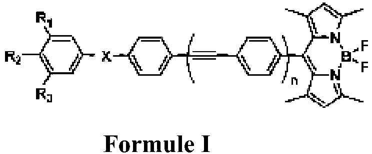 dans lequel :
R₁, R₂ et R₃ = alkyle en C₁-C₁₈ ou hydrocarbure alcoxy en C₁-C₁₈ ;
X = -CONH ou -NH ou -COO ou -CO ou -SO₂NH ; et
n = 1 ou 2 ou 3 ;
ii. ajouter 0,1 % en poids d'un photo-initiateur suivi par dégazage pendant une période dans une plage de 10 - 20 minutes en purgeant à l'argon et exposition subséquente à une lumière UV (365 nm) pendant une période dans une plage de 70-80 heures pour former un gel réticulé ; et
iii. dissoudre le gel réticulé tel qu'obtenu à l'étape (ii) dans un solvant organique suivi par un moulage par goutte sur substrats de verre et évaporation du solvant sous vide à température ambiante dans une plage de 25-30 °C pour obtenir la formulation d'encre photonique.

9. Procédé selon la revendication 8, dans lequel le photo-initiateur est de la 2,2-diméthoxy-2-phénylacétophénone.

10. Procédé selon la revendication 8, dans lequel le solvant organique est sélectionné parmi le groupe composé d'un solvant à base d'halogène, d'un solvant polaire protique, d'un solvant polaire aprotique, d'alcools, d'un solvant aromatique, d'un solvant à base de cétone et d'un solvant à base d'éther.

11. Procédé selon la revendication 8, dans lequel le solvant à base d'halogène est sélectionné parmi le groupe composé de chloroforme et de dichlorométhane ; dans lequel le solvant polaire protique est sélectionné parmi le groupe composé d'eau et d'alcools ; dans lequel les alcools sont sélectionnés parmi le groupe composé de méthanol, éthanol, butanol et isopropanol ; dans lequel le solvant polaire aprotique est sélectionné parmi le groupe composé de NMP (N-méthyl-2-pyrrolidone) et de DMF (diméthylformamide) ; dans lequel le solvant aromatique est sélectionné parmi le groupe composé de chlorobenzène, xylène, benzène, toluène, dichlorobenzène, mésitylène, tétraline, tétraméthylbenzène et pyridine ; et dans lequel le solvant à base d'éther est sélectionné parmi le groupe composé de THF (tétrahydrofurane) et de diéthyléther.

12. Procédé selon la revendication 8, dans lequel la dilution avec un solvant organique est faite à un facteur de 20.

13. Procédé de développement d'une formulation d'encre photonique, comprenant :
i. ajouter un chromophore organique fluorescent, thermo-sensible, auto-assemblé de la formule I dans un solvant pour obtenir une solution ayant une concentration de plus de 5 mM ;
dans lequel la formule I est : 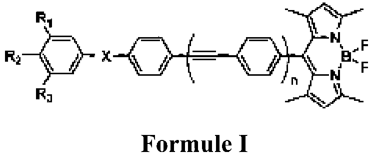 dans lequel :
R₁, R₂ et R₃ = alkyle en C₁-C₁₈ ou hydrocarbure alcoxy en C₁-C₁₈ ;
X = -CONH ou -NH ou -COO ou -CO ou -SO₂NH ; et
n = 1 ou 2 ou 3 ; et
ii. mouler par goutte la solution telle qu'obtenue à l'étape (i) suivi par un recuit à une température dans une plage de 290-300 °C, permet une variation de couleur angle-dépendante sous lumière visible et lumière UV.

14. Procédé selon la revendication 13, dans lequel la concentration de la solution est de 10 mM.

15. Procédé selon la revendication 13, dans lequel le solvant est sélectionné parmi le groupe composé d'un solvant à base d'halogène, d'un solvant polaire protique, d'un solvant polaire aprotique, d'alcools, d'un solvant aromatique, d'un solvant à base de cétone et d'un solvant à base d'éther ; dans lequel le solvant à base d'halogène est sélectionné parmi le groupe composé de chloroforme et de dichlorométhane ; dans lequel le solvant polaire protique est sélectionné parmi le groupe composé d'eau et de solvant à base d'alcools ; dans lequel les alcools sont sélectionnés parmi le groupe composé de méthanol, éthanol, butanol et isopropanol ; dans lequel le solvant polaire aprotique est sélectionné parmi le groupe composé de NMP (N-méthyl-2-pyrrolidone) et de DMF (diméthylformamide) ; dans lequel le solvant aromatique est sélectionné parmi le groupe composé de chlorobenzène, xylène, benzène, toluène, dichlorobenzène, mésitylène, tétraline, tétraméthylbenzène et pyridine ; et dans lequel le solvant à base d'éther est sélectionné parmi le groupe composé de THF (tétrahydrofurane) et de diéthyléther.
